(19) Europäisches Patentamt
European Patent Office
Office européen des brevets

(11) **EP 2 790 820 B1**

(12) **EUROPÄISCHE PATENTSCHRIFT**

(45) Veröffentlichungstag und Bekanntmachung des Hinweises auf die Patenterteilung:
**28.11.2018  Patentblatt 2018/48**

(21) Anmeldenummer: **12778625.9**

(22) Anmeldetag: **18.10.2012**

(51) Int Cl.:
*B01D 69/02* (2006.01)    *B01D 67/00* (2006.01)
*B01D 19/00* (2006.01)    *B01D 46/00* (2006.01)

(86) Internationale Anmeldenummer:
**PCT/EP2012/004364**

(87) Internationale Veröffentlichungsnummer:
**WO 2013/087131 (20.06.2013 Gazette 2013/25)**

(54) **HYDROPHOBE BZW. OLEOPHOBE MIKROPORÖSE POLYMERMEMBRAN MIT STRUKTURELL INDUZIERTEM ABPERL-EFFEKT**

HYDROPHOBIC OR OLEOPHOBIC MICROPOROUS POLYMER MEMBRANE WITH STRUCTURALLY INDUCED BEADING EFFECT

MEMBRANE POLYMÈRE MICROPOREUSE HYDROPHOBE OU OLÉOPHOBE AYANT UN EFFET DÉPERLANT STRUCTURELLEMENT INDUIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2011   DE 102011121018**

(43) Veröffentlichungstag der Anmeldung:
**22.10.2014   Patentblatt 2014/43**

(73) Patentinhaber: **Sartorius Stedim Biotech GmbH 37079 Göttingen (DE)**

(72) Erfinder:
• **WÜNN, Eberhard 37077 Göttingen (DE)**
• **SCHLEUSS, Tobias 37085 Göttingen (DE)**

(74) Vertreter: **Müller-Boré & Partner Patentanwälte PartG mbB Friedenheimer Brücke 21 80639 München (DE)**

(56) Entgegenhaltungen:
WO-A1-2004/048450    JP-A- 2001 207 123
US-A- 5 217 802    US-A1- 2007 278 109
US-A1- 2010 282 680

• **MAO PENG ET AL: "Porous Poly(Vinylidene Fluoride) Membrane with Highly Hydrophobic Surface", JOURNAL OF APPLIED POLYMER SCIENCE, JOHN WILEY & SONS, INC, US, vol. 98, no. 3, 1 January 2005 (2005-01-01), pages 1358-1363, XP007918823, ISSN: 0021-8995, DOI: 10.1002/APP.22303 [retrieved on 2005-08-12]**
• **NAKAJIMA A ET AL: "INVITED REVIEW - RECENT STUDIES ON SUPER-HYDROPHOBIC FILMS", MONATSHEFTE FÜR CHEMIE - CHEMICAL MONTHLY ; AN INTERNATIONAL JOURNAL OF CHEMISTRY, SPRINGER-VERLAG, AU, vol. 132, 1 January 2001 (2001-01-01), pages 31-41, XP001090555, ISSN: 1434-4475**

**Beschreibung**

Die vorliegende Erfindung betrifft eine hydrophobe bzw. oleophobe mikroporöse Polymermembran mit strukturell induziertem Abperl-Effekt, Verfahren zur Herstellung der erfindungsgemäßen Membran, die Verwendung der Membran in der Sterilfiltration von gasförmigen Fluiden und die Verwendung der Membran als Flüssigkeitssperre in zu belüftenden, flüssigkeitshaltigen Systemen.

Gebräuchliche Verfahrensschritte im industriellen Betrieb von metallenen wiederverwendbaren Containern sind Reinigung und Sterilisieren mit Heißdampf, Befüllen, Temperieren, Transport und Entleeren von Flüssigkeiten. Mit Ausnahme des Reinigungsschrittes erfordern die angeführten Prozesse an mindestens einer Behälteröffnung (einem Flansch) ein steril filtrierendes Belüftungselement ("venting device"), um Überdruck- bzw. Vakuumschäden am Betriebsmittel zu verhindern und gleichzeitig die Keimfreiheit des lösungsberührten Innenraumes bei Belüftung zu gewährleisten.

Das Belüftungselement ist die Schnittstelle zwischen einem vorzugsweise sterilen, flüssigkeitshaltigen Behälterinnenraum (zum Beispiel als Flüssigkeitssperre in Dialysevorrichtungen, Infusionslösungsbehältern oder in Fermentern) und äußerer, vorzugsweise unsteriler Atmosphäre. Als eigentliches Trennmedium im Belüftungselement wird in den meisten Fällen ein steril filtrierender Membranfilter aus einem synthetischen Polymer gewählt. In seltenen Fällen wird ein Vliesstoff aus synthetischem Fasermaterial eingebaut.

Synthetische Polymere haben in vielen Fällen hydrophobe Oberflächeneigenschaften, die auf die intrinsische Hydrophobizität der synthetischen Materialien zurückzuführen sind. Die Hydrophobizität ist eine Materialkonstante. Sie wird durch die extramolekularen Wechselwirkungen der das Polymer aufbauenden Atomgruppen hervorgerufen.

Aufgrund ihrer gegenüber Wasser niedrigen Oberflächenspannung weisen diese Materialien eine reduzierte Benetzbarkeit mit wässrigen und polaren Medien auf. Für glatte, nicht poröse Oberflächen ist der Kontaktwinkel gegenüber Wasser ein Maß für die Oberflächenspannung. Oberflächen mit einem Kontaktwinkel von mehr als 90° gegenüber Wasser werden als hydrophob bezeichnet. Hydrophobe Substanzen sind nicht mit Wasser mischbar bzw. benetzbar. Die Substanzen sind meist unpolar, und ihre Oberflächenspannung liegt bei 20 °C unter 72 mN/m. Oleophobe Substanzen, die sich durch eine besonders hohe Hydrophobizität auszeichnen, sind nicht mit Ölen und anderen unpolaren Stoffen mischbar oder benetzbar. Ihre Oberflächenspannung ist bei 20 °C kleiner als 21 mN/m. Typische Oberflächenspannungen von Polymeren, die zu Membranen verarbeitet werden, und deren Kontaktwinkel gegenüber Wasser sind in Tabelle 1 aufgeführt.

Tabelle 1: Oberflächenspannungen von glatten, nicht-porösen Polymeren und deren Kontaktwinkel gegenüber Wasser

| Polymer | Oberflächenspannung [mN/m] | Kontaktwinkel gegenüber Wasser [°] |
|---|---|---|
| Polyamid (Nylon) | 75[a] | 49[a] |
| Polyethersulfon (PES) | 58[a] | 54[a] |
| Polyetheretherketon (PEEK) | 49[a] | 71[a] |
| Polyethylen (PE) | 31[b] | 94[b] |
| Polyvinylidenfluorid (PVDF) | 25[b] | 85[b] |
| Polytetrafluorethylen (PTFE) | 18,5[b] | 108[b] |

a) Membrane Science and Technology Series, 11, Membrane Contactors: Fundamentals, Applications and Potentialities", 2005, E. Drioli et al.
b) J. Appl. Polym. Sci., 1969, 13, 1741-1747, D.K. Owens et al.

Der hydrophobe Charakter des steril filtrierenden Trennmediums ist aus zweierlei Gründen Voraussetzung für den Einbau in ein Belüftungselement. Zum einen darf sich bei Kontakt mit Wasser bzw. wässrigem Medium oder insbesondere Wasserdampf (bei Bedampfung oder Begasung von Bioreaktoren) kein geschlossener Wasserfilm auf der Oberfläche bzw. innerhalb des Trennmediums bilden. Der Wasserfilm würde den Druckaustausch (Gasaustausch) zwischen innerer und äußerer Atmosphäre verhindern und dadurch die mechanische Integrität des Behälters gefährden. Eine starke Hydrophobizität (z. B. wie bei fluorhaltigen organischen Polymeren) bis hin zum oleophoben Charakter des Trennmediums ist in diesem Fall vorteilhaft.

So wird bei Belüftungsanwendungen auf gebräuchliche Materialien für Membranfilter, wie Polytetrafluorethylen (PTFE), Polypropylen (PP) und Polyvinylidenfluorid (PVDF), bei Fasermaterial auf Polyethylen (PE) zurückgegriffen.

Wie aus Tabelle 1 ersichtlich, zeigen perfluorierte Materialien, wie zum Beispiel Polytetrafluorethylen (PTFE), besonders hydrophobe Eigenschaften. Enthält das Ausgangspolymer keine Fluorsubstituenten, wie dies zum Beispiel bei Polysulfon (PSU) oder Polyethersulfon (PES) der Fall ist, so ist eine Modifizierung der Membranoberfläche mit fluorhaltigen Agenzien in monomerer, oligomerer oder polymerer Form möglich, um die Oberflächenspannung des Polymers herabzusetzen, so dass eine Benetzung mit Flüssigkeiten geringer Oberflächenspannung, wie zum Beispiel Tensidlösungen, Alkoholen oder Ölen (vergleiche Tabelle 2), nicht erfolgt.

Tabelle 2: Oberflächenspannung von Flüssigkeiten

| Flüssigkeit | Oberflächenspannung [mN/m] |
|---|---|
| Wasser | 72,88[a] |
| Paraffin | 23[b] |
| Ethanol | 22,3[c] |
| Methanol | 22,5[c] |
| n-Octan | 21,8[a] |

a) A.W. Adamson, Physical Chemistry of Surfaces, 6th ed., Wiley 1997
b) J. Appl. Polym. Sci., 1969, 13, 1741-1747, D.K. Owens et al.
c) J. Chem. Eng. Data, 1981, 26, 323-333, G. Körösi et al.

Im Stand der Technik sind verschiedene Verfahren zur Bereitstellung von Membranen mit sowohl hydrophoben als auch oleophoben Eigenschaften beschrieben.

So beschreiben US 5,217,802 und US 5,286,382 poröse Membranen mit einer Polymerbeschichtung, die aus der *in-situ*-Vernetzung von Polymeren, hergestellt aus Monomeren mit Fluorsubstituenten, herrührt. Als Monomere werden bevorzugt Fluoralken-, Fluoracrylat- bzw. Fluorstyrolderivate oder Fluoralkylsiloxane verwendet. Die mit der Polymerbeschichtung versehenen Membranen weisen eine Oberflächenspannung von mehr als 21 dynes/cm (21 mN/m) auf.

WO 2009/065092 A1 offenbart mikroporöse textilverstärkte Polyolefinmembranen aus PE, deren Hauptoberflächen durch ein Imprägnierverfahren selektiv hydrophob bzw. oleophob, d.h. mit Oberflächenspannungen von weniger als 21 mN/m, ausgestattet sind. Durch das genannte Imprägnierverfahren ist es möglich, eine Hauptoberfläche der mikroporösen PE-Membran mit einem Fluorsubstituenten enthaltenden Polymer oleophob zu machen, während die gegenüberliegende Hauptoberfläche der PE-Membran ihre hydrophoben Ausgangseigenschaften behält. Nachteilig bei diesen aus WO 2009/065092 A1 bekannten Membranen, die sich als atmungsaktive Materialien bei der Bekleidungsherstellung prinzipiell bewährt haben, ist, dass sie keine ausreichende Beständigkeit gegenüber energiereicher Strahlung, zum Beispiel Gamma-Strahlung, und eine nur unzureichende Temperaturstabilität aufweisen.

US 6,579,342 B2 beschreibt die Herstellung eines oleophoben Belüftungsfilters für intravenös zu verabreichende Fluide. Der Belüftungsfilter wird durch Pfropfung eines Fluorsulfon-Oligomers mit perfluorierten Alkylsulfonamid-Gruppen auf ein polymeres Substrat hergestellt. Bei dem polymeren Substrat handelt es sich vorzugsweise um Poly(ether)sulfone, Polyamid, PVDF, Polyacrylate oder PTFE.

Gekennzeichnet sind derartige Filtermembranen aus dem Stand der Technik durch eine deutlich niedrigere Oberflächenspannung als das nicht-benetzende Medium, hervorgerufen durch die chemischen Eigenschaften der Membranoberfläche.

Auf intrinsisch hydrophoben Materialien, zum Beispiel Polymeren, wie sie in Tabelle 1 aufgeführt sind, erzielt man einen Selbstreinigungseffekt mit Wasser oder wässrigen Medien. Dieser wird technisch genutzt, um selbstreinigende Materialien zu erhalten, da Schmutzpartikel auf derartigen Beschichtungen nur wenige, voneinander getrennt liegende Kontaktpunkte mit der Oberfläche haben und sich daher in einfacher Weise abspülen lassen.

Dieser Abperl-Effekt, der sogenannte "Lotus-Effekt", ist von nicht-porösen Oberflächen wie Folien, textilen Fasern oder metallischen Werkstücken bekannt und wird zum Beispiel durch Auf- und Einprägen von Oberflächenstrukturen oder durch teils wiederablösbare Aufbringung partikulärer Beschichtungen erreicht. Dieser technisch genutzte Lotus-Effekt ist dem bei Lotus-Gewächsen beobachteten Selbstreinigungseffekt nachempfunden. Bei Lotus-Gewächsen wird dieser Selbstreinigungseffekt durch eine hydrophobe Doppelstruktur der Oberfläche verursacht, wodurch die Kontaktfläche und damit die Adhäsionskraft zwischen der Oberfläche und den auf ihr liegenden Partikeln und Wassertropfen so stark verringert wird, dass es zur Selbstreinigung kommt. Diese Doppelstruktur resultiert aus einer charakteristisch geformten Epidermis der Lotus-Gewächse, auf deren äußersten Schicht sich Wachse befinden. Diese aufgelagerten Wachse sind hydrophob und bilden den zweiten Teil der Doppelstruktur. Somit kann Wasser nicht mehr in die Zwischenräume der Blattoberfläche gelangen, so dass sich die Kontaktfläche zwischen Wasser und Oberfläche drastisch verringert.

EP 2 011 629 A1 offenbart Mikroarrays mit einer Polymerbeschichtung, auf welchen durch Laserstrahlung Oberflächenbereiche selektiv aufgeraut und hydrophobisiert werden können, um einen Lotus-Effekt zu erzeugen. Die Laserbestrahlung erfolgt bevorzugt mit einer Energiedichte, die nur zur Aufrauung der Oberfläche, aber zu keinem Abtrag von Polymermaterial von der bestrahlten Oberfläche führt, d.h. die Energiedichte liegt unter der Ablationsgrenze.

Der vorliegenden Erfindung liegt die Aufgabe zugrunde, eine hydrophobe bzw. oleophobe mikroporöse Polymermembran bereitzustellen, die eine erhöhte flüssigkeitsabweisende Eigenschaft aufweist und sich dadurch besonders als Flüssigkeitssperre bzw. Sperrmembran in zu belüftenden Systemen eignet. Die bereitgestellte Polymermembran soll zudem ein rückstandfreies Abperlen eines flüssigen Mediums von der Membranoberfläche erlauben, um so ein unerwünschtes Spreiten des Mediums auf der Oberfläche zu unterbinden.

Diese Aufgabe wird durch die in den Ansprüchen gekennzeichneten Ausführungsformen der vorliegenden Erfindung gelöst.

Insbesondere wird erfindungsgemäß eine hydrophobe bzw. oleophobe mikroporöse Polymermembran mit strukturell induziertem Abperl-Effekt bereitgestellt, wobei mindestens eine Hauptoberfläche der Polymermembran aufgeraut ist und einen Kontaktwinkel gegenüber Wasser von mindestens 125° aufweist. Unter "Hauptoberflächen" im Sinne der vorliegenden Erfindung sollen die beiden äußeren Oberflächen einer Membran verstanden werden, die durch die Dicke des Membrankörpers durch Poren miteinander verbunden sind.

Unter "hydrophob" bzw. "oleophob" im Sinne der vorliegenden Erfindungen sollen Polymermembranen verstanden werden, deren Oberflächenspannung bei 20 °C kleiner als 72 mN/m bzw. kleiner als 21 mN/m ist. Demnach ist die Oleophobie eine gesteigerte Form der Hydrophobie, d.h. oleophobe Membranen haben eine noch geringere Oberflächenspannung als hydrophobe Membranen und zeigen demnach noch stärkere flüssigkeitsabweisende Eigenschaften.

Der Begriff "mikroporös" beschreibt erfindungsgemäß eine Polymermembran, die eine Porengröße von 0,1 $\mu$m bis 20 $\mu$m, vorzugsweise von 0,1 bis 15 $\mu$m und besonders bevorzugt von 0,2 bis 10 $\mu$m aufweist.

Das Ausgangsmaterial für die hydrophobe oder oleophobe mikroporöse Polymermembran mit strukturell induziertem Abperl-Effekt unterliegt erfindungsgemäß keiner Einschränkung. So besteht das Ausgangsmaterial der erfindungsgemäßen Polymermembran beispielsweise aus Polysulfon (PSU), Polyethersulfon (PES), Polyphenylensulfid (PPS), PBI (Polybenzimidazol), Polyetheretherketon (PEEK) oder Polyamidimid (PAI), die mit fluorhaltigen Agenzien modifiziert werden (wie beispielsweise bekannt aus US 5,217,802, US 5,286,382, US 6,579,342 B2, WO 2009/065092 A1 oder DE 10 2010 044 648.3-44), oder aus bereits perfluorierten Materialien wie beispielsweise Polyvinylidenfluorid (PVDF) oder Polytetrafluorethylen (PTFE). Besonders bevorzugt besteht das Ausgangsmaterial der erfindungsgemäßen Polymermembran aus Polysulfon (PSU) oder Polyethersulfon (PES).

Unter "strukturell induziertem Abperl-Effekt" versteht man erfindungsgemäß, dass die erfindungsgemäße Membran mindestens an einer Hauptoberfläche aufgeraut wird, wodurch der Membran in besonderer Weise flüssigkeitsabweisende Eigenschaften verliehen werden, die einen Abperl-Effekt induzieren. Die flüssigkeitsabweisenden Eigenschaften der erfindungsgemäßen Membran aufgrund ihrer Porosität und der erfindungsgemäßen Aufrauung spiegeln sich in einem vorteilhaft hohen Kontaktwinkel der aufgerauten Hauptoberfläche gegenüber Wasser wider, der mindestens 125°, bevorzugt mindestens 127°, besonders bevorzugt mindestens 135° und am meisten bevorzugt mindestens 145° beträgt.

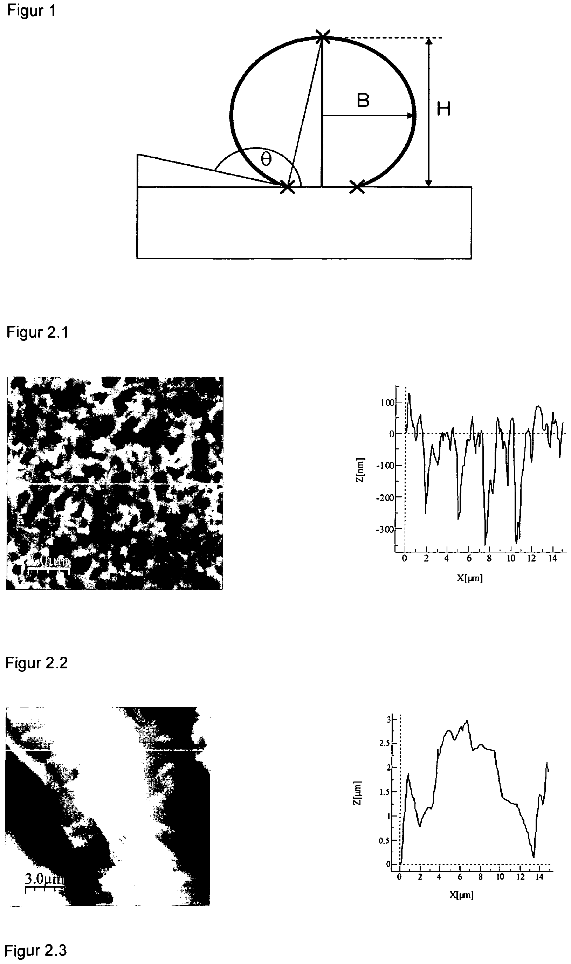

Der im Rahmen der vorliegende Erfindung definierte Kontaktwinkel ist der statische Kontaktwinkel in Grad [°] gegenüber Reinstwasser. Der erfindungsgemäße Kontaktwinkel $\theta$ kann analog ASTM-D5946-09 mit einem handelsüblichen Goniometer (zum Beispiel Typ PG-3 der Firma FIBRO system AB) durch Aufbringen eines Tropfen Reinstwassers (1 bis 2 $\mu$L) auf die zu analysierende Oberfläche und anschließender Auswertung gemäß Gleichung 1 ermittelt werden, wobei $\theta$ den erfindungsgemäßen Kontaktwinkel, B die halbe Breite des Tropfens und H die Höhe des Tropfens bezeichnet (siehe Figur 1). Die Auswertung kann dabei mit Hilfe einer Software (zum Beispiel PG Software der Firma FIBRO system AB) erfolgen.

$$\theta = 2 \arctan (H/B) \qquad \text{(Gleichung 1)}$$

Erfindungsgemäß ist mindestens eine der beiden Hauptoberflächen der Polymermembran aufgeraut, um den strukturell induzierten Abperl-Effekt zu erzielen. Gemäß einer Ausführungsform der vorliegenden Erfindung können auch beide Hauptoberflächen der Polymermembran aufgeraut sein. In diesem Fall können die beiden Hauptoberflächen die gleiche Oberflächenrauigkeit oder auch eine unterschiedliche Oberflächenrauigkeit aufweisen. Erfindungsgemäße Membranen, bei welchen beide Hauptoberflächen in gleichem oder in unterschiedlichem Ausmaß aufgeraut sind, haben sich insbesondere bei Anwendungen bewährt, in denen ein flüssigkeitsführendes System belüftet wird, welches in einer feuchten Umgebung platziert ist, in der es auch von außen zu Kondensation/Tröpfchenbildung am Belüftungsfilter mit der erfindungsgemäßen Membran kommen kann.

Die Aufrauung der mindestens einen Hauptoberfläche der erfindungsgemäßen Polymermembran kann durch mechanische Behandlung sowie gegebenenfalls physikalische und/oder chemische Nachbehandlung einer hydrophoben bzw. oleophoben Ausgangspolymermembran bewerkstelligt werden. Die Aufrauung kann aber auch im Herstellungsprozess der Ausgangspolymermembran durch mechanische Behandlung sowie gegebenenfalls physikalische und/oder chemische Behandlung bewerkstelligt werden, wobei die Polymermembran erst anschließend wie im Stand der Technik bekannt (beispielsweise in US 5,217,802, US 5,286,382, US 6,579,342 B2, WO 2009/065092 A1 oder DE 10 2010 044 648.3-44 beschrieben) durch fluorhaltige Agenzien hydrophob bzw. oleophob modifiziert wird. Beide Alternativen zur Aufrauung der Hauptoberfläche(n) werden vorzugsweise derart durchgeführt, dass die übrigen Membraneigenschaften nicht verändert werden. Das Herstellungsverfahren der Ausgangspolymermembran unterliegt keinerlei Einschränkung. Die Ausgangspolymermembran kann zum Beispiel über ein Verdunstungsverfahren oder über Phaseninversion hergestellt werden.

Gemäß der vorliegenden Erfindung weist die mindestens eine aufgeraute Hauptoberfläche der erfindundungsgemäßen Polymermembran eine Oberflächenrauigkeit in einer Höhe von 1 bis 5 $\mu$m auf. Die lateralen Abstände der Oberflächenrauigkeit befinden sich in der selben Größenordnung. Die Ermittlung der Oberflächenrauigkeit erfolgt erfindungsgemäß mit Hilfe der Rasterkraftmikroskopie (RKM). Die Oberflächenrauigkeit ergibt sich dabei aus dem arithmetischen Mittel der Einzelmesswerte der Amplituden von Unebenheiten, die beim Abtasten einer Messstrecke auf einer äußeren porösen Membranoberfläche erfasst werden. Dabei ist ein Offset "0" so gewählt, dass auf der Messstrecke die größtmögliche Zahl der erkennbaren Erhebungen bzw. Vertiefungen im Bereich maximaler Steigung (Gradient am Rand der Pore) geschnitten wird.

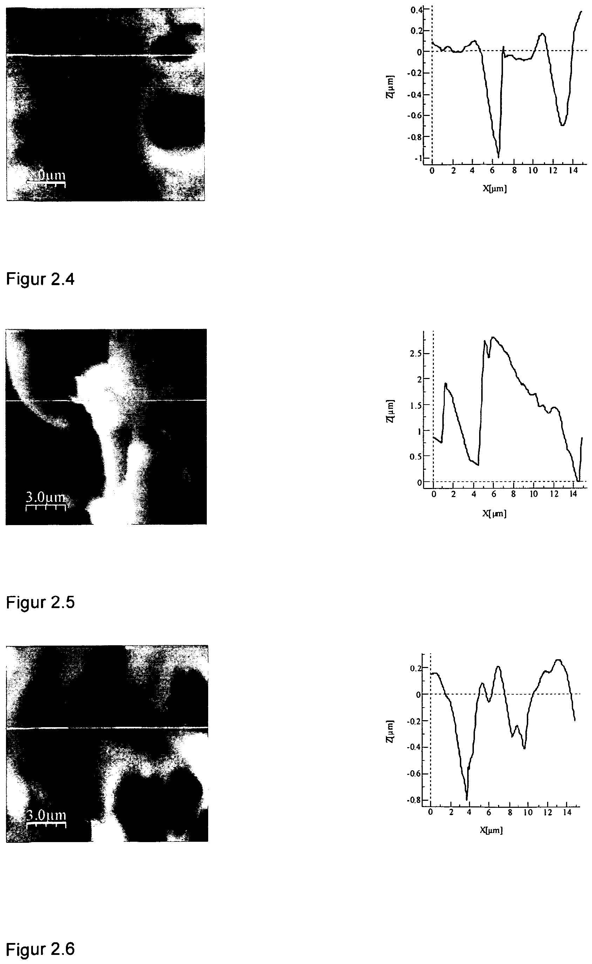

Figuren 2.1 bis 2.6 zeigen RKM-Bilder nebst Höhenprofilen der Hauptoberflächen verschiedener Membranen mit üblicher, glatter Hauptoberfläche (Figuren 2.1, 2.3 und 2.5) und verschiedener Membranen mit erfindungsgemäß aufgerauter Hauptoberfläche (Figuren 2.2, 2.4 und 2.6). Die Membranen wurden jeweils mittels eines handelsüblichen Rasterkraftmikroskops der Firma Nanotec Electronica S.L. im Tapping-Modus an mindestens zwei unterschiedlichen Positionen abgetastet, die mehr als 2 cm voneinander entfernt liegen. Dabei wurden Olympus AC240 Cantilever (70 kHz, 2 N/m) verwendet, die bei ca. 200 mV (20 nm) freier Amplitude betrieben wurden. Der Setpoint lag bei ca. 150 mV, die Scangeschwindigkeit lag im Bereich von 0,03 bis 0,1 Hz pro Zeile bei einer Auflösung von 256x256 Punkten (jeweils Trace und Retrace) auf 15x15 $\mu$m. Das Reduzieren der Scangeschwindigkeit erhöhte die Bildqualität insbesondere bei rauen Proben.

Bei Vergleich der Figuren 2.1 bis 2.6 ist erkennbar, dass im Fall einer üblichen, glatten Oberfläche (Figuren 2.1, 2.3 und 2.5) die äußeren Poren gut erkennbar sind und eine Rauigkeit nur durch die Oberflächenporosität entsteht, d.h. Höhenabweichungen erfolgen insbesondere nach unten (negative Höhendifferenz). Dahingegen zeigen die Aufnahmen der erfindungsgemäß aufgerauten Membranoberflächen (Figuren 2.2, 2.4 und 2.6) keine differenzierten Poren. Bei diesen Membranoberflächen überwiegt die induzierte Rauigkeit die Porenstruktur, und deutlich erhabene Strukturen (positive Höhendifferenz) in der gewünschten Größenordnung sind erkennbar.

Tabelle 3 zeigt die Auswirkung der Aufrauung einer mikroporösen Oberfläche unterschiedlicher Polymermembranen (Material Polyethersulfon oder Polypropylen) anhand der Kontaktwinkel gegenüber Wasser. Im Vergleich von glatter zur erfindungsgemäß aufgerauten Oberfläche erkennt man eine deutliche Zunahme der Kontaktwinkel und damit eine Zunahme der vorteilhaft flüsigkeitsabweisenden Eigenschaften.

Tabelle 3: Kontaktwinkel gegenüber Wasser an glatter und erfindungsgemäß aufgerauter Oberfläche

| Porengröße und Material | Oberflächen-besc haffenheit | Kontaktwinkel gegenüber Reinstwasser | vgl. Rauigkeitsprofil |
|---|---|---|---|
| 0,2 $\mu$m (PES) | glatt | 113° $\pm$ 6° | Figur 2.1 |
| 0,2 $\mu$m (PES) | rau | 145° $\pm$ 6° | Figur 2.2 |
| 0,2 $\mu$m (PP) | glatt | 121° $\pm$ 2° | |
| 0,2 $\mu$m (PP) | rau | 127° $\pm$ 2° | |
| 1,2 $\mu$m (PES) | glatt | 118° $\pm$ 3° | Figur 2.3 |
| 1,2 $\mu$m (PES) | rau | 145° $\pm$ 2° | Figur 2.4 |
| 3,0 $\mu$m (PES) | glatt | 121° $\pm$ 2° | Figur 2.5 |
| 3,0 $\mu$m (PES) | rau | 148° $\pm$ 3° | Figur 2.6 |

Die zusätzliche Aufrauung der mikroporösen Membranstruktur, welche sich in den Beispielen der Tabelle 3 in einem Höhen- und Breitenbereich von 1 bis 5 $\mu$m befindet, führt wie aus Tabelle 3 ersichtlich zu einer gezielten Reduktion der Kontaktfläche von Medium und Membran und damit zur Verminderung der physikalischen Wechselwirkungen (Adhäsionskräfte), so dass eine nicht-benetzende poröse Oberfläche mit Abperl-Effekt entsteht, der überraschend den Abperl-Effekt vergleichbar hydrophober bzw. oleophober poröser Polymermembranen ohne erfindungsgemäß aufgeraute Oberfläche deutlich übertrifft.

Gemäß einer bevorzugten Ausführungsform der vorliegenden Erfindung ist die erfindungsgemäße Polymermembran strahlungsresistent bis 50 kGy, bevorzugt bis 100 kGy, besonders bevorzugt bis 1000 kGy. Erfindungsgemäß wird unter dem Begriff "strahlungsresistent" verstanden, dass der Festigkeitsverlust der Membran nach Gamma-Bestrahlung mit einer Dosis von 50 kGy nicht mehr als 30 %, bevorzugt nicht mehr als 20 % und besonders bevorzugt nicht mehr als 10 % beträgt. Der Festigkeitsverlust der erfindungsgemäßen Membran ergibt sich dabei aus der Abnahme des Festigkeitswerts der Membran nach der Gamma-Bestrahlung mit einer Dosis von 50 kGy bezogen auf den Festigkeitswert der Membran vor der Gamma-Bestrahlung mit dieser Dosis. Beträgt der Festigkeitswert der bestrahlten Membran 80 % des Festigkeitswertes der unbestrahlten Membran, beträgt der Festigkeitsverlust erfindungsgemäß 20 %. Die Festigkeitswerte der bestrahlten und unbestrahlten Membranen werden im Sinne der vorliegenden Erfindung durch ihre maximalen Zugkraftwerte $F_{max}$ bei Raumtemperatur beschrieben. Zur Bestimmung von $F_{max}$ wird hierfür eine Membranprobe mit den Maßen 20 mm x 150 mm zugeschnitten und horizontal in eine "Zwick Z2.5/TN1S"-Materialprüfmaschine der Fa. Zwick GmbH so eingespannt, dass die freie Probenlänge zwischen den Klemmbacken 4 cm beträgt. Der Kraftaufnehmer "KAP-Z 200N" (Fa. A.S.T., D-01287 Dresden) wird mit einer Geschwindigkeit von beispielsweise 5 cm/min bewegt. Die Messdaten werden von der Gerätesoftware "testXpert" (Fa. Zwick GmbH, D-89079 Ulm) kontinuierlich erfasst und visualisiert. $F_{max}$ wird als Mittelwert von drei bestrahlten Membranproben bzw. drei unbestrahlten Membranproben bestimmt. Die erfindungsgemäß bevorzugte Strahlungsresistenz der erfindungsgemäßen Membran begründet sich in dem verstärkt auftretenden Trend zur "Single-use"-Nutzung von Kunststoffbehältnissen bei der Prozessierung von Flüssigkeiten. Im Unterschied zu Metallbehältern werden Behälter aus organischen Polymeren zum Zweck der Sterilisierung nicht autoklaviert, sondern üblicherweise durch energiereiche Strahlung, zum Beispiel durch Gamma-Strahlung, keimfrei für die Verwendung vorbereitet. Demzufolge ist eine Membran, welche die erfindungsgemäß bevorzugte Strahlungsresistenz aufweist, in besonderer Weise für die Sterilfiltration von gasförmigen Fluiden oder als Flüssigkeitssperre für zu belüftende Systeme geeignet.

Die Größe und Struktur der erfindungsgemäßen Polymermembran unterliegt keiner Einschränkung. Bevorzugt beträgt die Dicke der Polymermembran zwischen 10 $\mu$m und 350 $\mu$m. Gemäß einer Ausführungsform der vorliegenden Erfindung weist die Polymermembran eine Schwammstruktur auf, wobei die Schwammstruktur symmetrisch oder asymmetrisch sein kann. Zudem kann die erfindungsgemäße Polymermembran auch eine Stundenglasstruktur oder Trichterstruktur aufweisen.

Die erfindungsgemäße Polymermembran kann zudem einen Hydrophobizitätsgradienten wie in DE 10 2010 044 648.3-44 beschrieben aufweisen.

Desweiteren werden erfindungsgemäße Verfahren zur Herstellung der erfindungsgemäßen Polymermembran bereitgestellt.

Gemäß einer Ausführungsform des Verfahrens zur Herstellung der erfindungsgemäßen Polymermembran umfasst das Verfahren:

Bereitstellen einer hydrophoben bzw. oleophoben Ausgangspolymermembran; und
Aufrauen mindestens einer Hauptoberfläche der Ausgangspolymermembran durch mechanische Behandlung sowie gegebenenfalls physikalische und/oder chemische Behandlung.

Im ersten Schritt des erfindungsgemäßen Verfahrens wird eine Ausgangsmembran bereitgestellt, die hydrophobe bzw. oleophobe Eigenschaften aufweist. Die Ausgangsmembran kann beispielsweise mittels Verdunstungsverfahren oder Phaseninversion hergestellt werden. Im zweiten Schritt des Verfahrens wird mindestens eine Hauptoberfläche der Ausgangspolymermembran durch mechanische Behandlung sowie gegebenenfalls physikalische und/oder chemische Behandlung erfindungsgemäß aufgeraut. Die Art der Aufrauung unterliegt keiner Einschränkung. Beispielsweise kann die mindestens eine Oberfläche durch kurzzeitigen Kontakt mit einer rotierenden Stahlwalze mit eingefräster Rautenstruktur und/oder durch Schleifen mit Schleifpapier und gegebenenfalls durch chemisches Anätzen erfindungsgemäß aufgeraut werden. Die Aufrauung wird vorzugsweise derart durchgeführt, dass die übrigen Membraneigenschaften der Polymermembran nicht verändert werden.

Gemäß einer alternativen Ausführungsform des Verfahrens zur Herstellung der erfindungsgemäßen Polymermembran umfasst das Verfahren:

Bereitstellen einer Ausgangspolymermembran;
Aufrauen mindestens einer Hauptoberfläche der Ausgangspolymermembran durch mechanische Behandlung sowie gegebenenfalls physikalische und/oder chemische Behandlung; und
anschließendes hydrophobes bzw. oleophobes Modifizieren der im vorhergehenden Schritt aufgerauten Polymermembran.

Im ersten Schritt des alternativen Herstellungsverfahrens der erfindungsgemäßen Polymermembran wird eine Ausgangspolymermembran bereitgestellt, die noch keine hydrophoben bzw. oleophoben Eigenschaften aufweisen muss, aber kann. Mindestens eine Hauptoberfläche der Ausgangspolymermembran wird im zweiten Schritt wie oben beschrieben durch mechanische Behandlung sowie gegebenenfalls physikalische und/oder chemische Behandlung erfindungsgemäß aufgeraut. Anschließend wird die erfindungsgemäß aufgeraute Polymermembran wie im Stand der Technik bekannt hydrophob bzw. oleophob modifiziert.

Schließlich stellt die vorliegende Erfindung die Verwendung der erfindungsgemäßen mikroporösen Polymermembran mit Abperl-Effekt in der Sterilfiltration von gasförmigen Fluiden und die Verwendung der erfindungsgemäßen mikroporösen Polymermembranen mit Abperl-Effekt als Flüssigkeitssperre in zu belüftenden flüssigkeitshaltigen Systemen bereit.

Die Polymermembran der vorliegenden Erfindung zeigt überraschenderweise aufgrund ihrer erfindungsgemäß induzierten Oberflächenrauigkeit einen vorteilhaften zusätzlichen Abperl-Effekt (Lotus-Effekt) an einer nicht-benetzbaren, porösen Polymermembran, welche bereits durch die Porosität ihrer beiden Hauptoberflächen eine intrinsische Oberflächenrauigkeit aufweist. Aufgrund des Synergismus aus Porosität, Hydrophobizität und/oder Oleophobizität und zusätzlicher erfindungsgemäßer Aufrauung und der damit verbundenen erhöhten flüssigkeitsabweisenden Eigenschaften eignet sich die erfindungsgemäße Polymermembran besonders als Flüssigkeitssperre in zu belüftenden flüssigkeitshaltigen Systemen oder als Sperrmembran für medienführende Systeme. Zudem wird durch die erfindungsgemäß erhöhte Oberflächenrauigkeit vorteilhafterweise ein Spreiten eines flüssigen Mediums auf der äußeren Oberfläche der Membran unterbunden, was zu einem spontanen rückstandsfreien Abperlen des Mediums bei schräg oder senkrecht gestellter Polymermembran führt. Daher eignet sich die erfindungsgemäße Polymermembran im besonderen Maße als steriler Belüftungsfilter, wie er beispielsweise in Bioreaktoren eingesetzt wird, da in diesem Fall das Abperlen des wässrigen Mediums notwendig ist, damit der Filter nicht durch das hydrophile Medium auf seiner Oberfläche blockiert wird, wodurch der Gasaustausch mit der Umgebung des Bioreaktors beeinträchtigt werden würde.

Die vorliegende Erfindung wird anhand der folgenden, nicht einschränkenden Beispiele näher erläutert.

**Beispiele**

Beispiel 1:

Ein steriler Belüftungsfilter mit oleophober Flachfilterpolymermembran mit Schwammstruktur, die im Anschluss an die Herstellung nach dem Fällbadverfahren in einem nachgelagerten Oleophobierungsschritt mit einer Dispersion eines fluorhaltigen Polymers imprägniert und anschließend unter Vernetzung des Polymers thermisch behandelt wurde (wie in DE 10 2010 044 648.3-44 beschrieben), wird in ein Einweg-Fermentationsgefäß eingesetzt. Beim Autoklavieren des Gefäßes sammelt sich Feuchtigkeit im Innenraum und kondensiert nach Abkühlen auch am Belüftungsfilter. Tropfen von bis zu 20 µL sammeln sich und haften an der inwendigen äußeren Hauptoberfläche der Membran. Erst ab einem größeren Tropfenvolumen (> 20 µL) reicht ihr Gewicht aus, um ein Abrutschen von der Oberfläche auszulösen und die Belüftungsfläche nicht mehr zu verdecken. Die beschriebene Anhaftung der Tropfen führt zu einer verminderten Luftdurchlässigkeit gegenüber der freien Membranoberfläche und somit zum Bedarf einer größeren Lüftungsfläche, um einen Luftdurchsatz zu ermöglichen, der notwendig ist, um ein Bersten des Fermenters zu verhindern.

Eine oleophobe Flachfiltermembran mit gleicher Struktur wie vorstehend beschrieben wird mit einer erfindungsgemäß induzierten Oberflächenrauigkeit versehen, indem eine rotierende Stahlwalze des Durchmessers 10 cm mit eingefräster Rautenstruktur mit 1000 rpm und einem Anpressdruck von 0,7 N über die gegenläufig gelenkte Membran geführt wird. Analog dem oben beschriebenen Prozess wird diese erfindungsgemäße Polymermembran in den Belüftungsfilter eingesetzt. Nach dem Autoklavieren und beim Abkühlen der Anlage erfolgt ebenfalls eine Kondensation des Wasserdampfes an der inwendigen äußeren Oberfläche der Membran. Durch den erhöhten Kontaktwinkel perlen an der inwendigen äußeren Hauptoberfläche der Membran bereits kleinste Tröpfchen des Kondensats mit einem Volumen von weniger als 5 µL spontan ab. Im Gegensatz zu der nicht-aufgerauten inwendigen äußeren Membranoberfläche entstehen bei der erfindungsgemäßen Membran keine signifikanten Einbußen der Luftpermeabilität.

Beispiel 2:

In einem Reaktionsgefäß wird eine 1 %-ige BSA-Lösung (BSA = Bovines Serumalbumin) vorgelegt, und beim starken Rühren des Mediums gelangen Spritzer an den oleophoben Belüftungsfilter aus Polyvinylidenfluorid (PVDF, mit einer Porengröße von 1,2 µm). Das hydrophobe Filtermaterial verhindert ein Eindringen des Mediums in die Membran. Jedoch führt die gegenüber Wasser verminderte Oberflächenspannung des Mediums zu einem Spreiten der Flüssigkeit auf der inwendigen äußeren Hauptoberfläche der PVDF-Flachfiltermembran, was zu einer verminderten Luftdurchlässigkeit führt.

Eine oleophobe Flachfiltermembran aus Polyethersulfon (PES, mit einer Porengröße von 1,2 µm) wird ober- und unterseitig mit einem Anpressdruck von 1 N an stetig wasserbenetztem Schleifpapier der Körnung 400 der Firma Starcke GmbH, "Type 691A", vorbeigeführt. Die Oberflächenrauigkeit der Filtermembran erhöht sich erfindungsgemäß, wobei minimaler mechanischer Abrieb durch die Wässerung des Schleifpapiers stetig entfernt wird. Die Verwendung der erfindungsgemäßen mikroporösen, oleophoben Polymermembran mit erhöhter Oberflächenrauigkeit verhindert beim oben beschriebenen Rühren ein Spreiten des Mediums auf der inwendigen äußeren Membranoberfläche. Das in seiner Oberflächenspannung reduzierte Medium und der erhöhte Kontaktwinkel der Oberfläche des Mediums gegenüber Wasser ermöglichen ein Abperlen der Flüssigkeit, so dass Einbußen in der Luftdurchlässigkeit verhindert werden und eine ordnungsgemäße Funktion des Belüftungsfilters gewährleistet ist.

Beispiel 3:

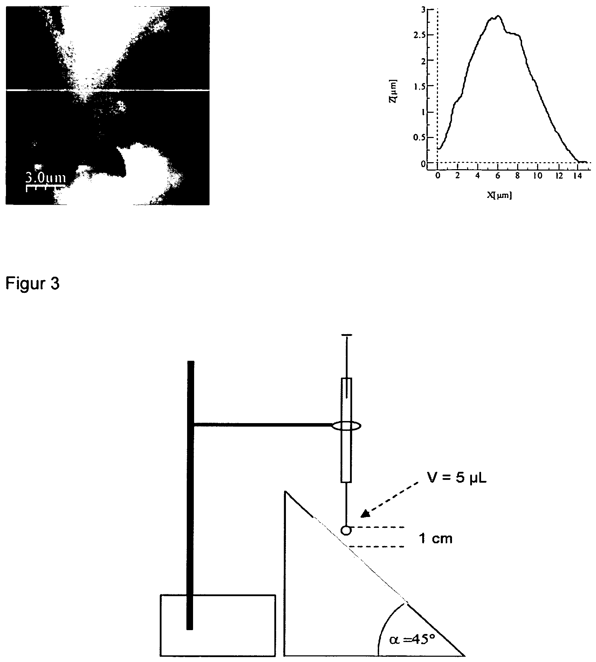

Auf einer schrägen Ebene im Winkel von 45° wird ein Tropfen Reinstwasser mit dem Volumen 5 µL aufgesetzt (siehe Figur 3). Auf einer PES-Membran mit üblicher glatter Oberfläche bleibt der Tropfen liegen, bei der erfindungsgemäß aufgerauten Membran nach Beispiel 2 perlt der Tropfen spontan ab.

Statt des Reinstwassers wird eine 1 %-ige BSA Lösung in 50 mM Tris-Puffer verwendet. Hierbei zeigt sich bei der Membran mit glatter Oberfläche ein Spreiten und Anhaften des Tropfens, wohingegen die erfindungsgemäß aufgeraute Membranoberfläche unabhängig von ihrer Porengröße zum spontanen Abperlen des Tropfens führt.

Die Figuren zeigen:

Figur 1: Bestimmung des erfindungsgemäßen statischen Kontaktwinkels gegenüber Wasser

Figur 2.1: RKM-Bild nebst Höhenprofil der Hauptoberfläche einer PES-Membran (Porengröße 0,2 µm) mit üblicher, glatter Hauptoberfläche

Figur 2.2: RKM-Bild nebst Höhenprofil der Hauptoberfläche einer PES-Membran (Porengröße 0,2 µm) mit erfindungsgemäßer, aufgerauter Hauptoberfläche

Figur 2.3: RKM-Bild nebst Höhenprofil der Hauptoberfläche einer PES-Membran (Porengröße 1,2 µm) mit üblicher, glatter Hauptoberfläche

Figur 2.4: RKM-Bild nebst Höhenprofil der Hauptoberfläche einer PES-Membran (Porengröße 1,2 µm) mit erfindungsgemäßer, aufgerauter Hauptoberfläche

Figur 2.5: RKM-Bild nebst Höhenprofil der Hauptoberfläche einer PES-Membran (Porengröße 3 µm) mit üblicher, glatter Hauptoberfläche

Figur 2.6: RKM-Bild nebst Höhenprofil der Hauptoberfläche einer PES-Membran (Porengröße 3 µm) mit erfindungsgemäßer, aufgerauter Hauptoberfläche

Figur 3: Versuchsaufbau für Beispiel 3

**Patentansprüche**

1. Hydrophobe bzw. oleophobe mikroporöse Polymermembran, deren Oberflächenspannung bei 20 °C kleiner als 72 mN/m bzw. kleiner als 21 mN/m ist, mit strukturell induziertem Abperl-Effekt, wobei mindestens eine Hauptoberfläche der Polymermembran aufgeraut ist, eine Oberflächenrauigkeit in einer Höhe von 1 µm bis 5 µm mit lateralen Abständen von 1 bis 5 µm aufweist und einen Kontaktwinkel gegenüber Wasser von mindestens 125° aufweist, wobei die Rauigkeit der mindestens einen aufgerauten Hauptoberfläche der Polymermembran

   durch mechanische Nachbehandlung einer hydrophoben/oleophoben Ausgangspolymermembran erzeugt wird oder
   durch mechanische Behandlung im Herstellungsprozess der Ausgangspolymermembran bewerkstelligt wird und die Membran anschließend hydrophob/oleophob modifiziert wird.

2. Polymermembran nach Anspruch 1, wobei die Polymermembran eine Porengröße von 0,1 µm bis 20 µm aufweist.

3. Polymermembran nach Anspruch 1 oder 2, wobei beide Hauptoberflächen der Polymermembran aufgeraut sind und die gleiche Oberflächenrauigkeit aufweisen.

4. Polymermembran nach Anspruch 1 oder 2, wobei beide Hauptoberflächen der Polymermembran aufgeraut sind und eine unterschiedliche Oberflächenrauigkeit aufweisen.

5.  Polymermembran nach einem der Ansprüche 1 bis 4, wobei die Polymermembran strahlungsresistent bis 50 kGy ist.

6.  Polymermembran nach einem der Ansprüche 1 bis 5, wobei die Polymermembran eine symmetrische oder asymmetrische Schwammstruktur aufweist.

7.  Polymermembran nach einem der Ansprüche 1 bis 6, wobei die Polymermembran eine Stundenglasstruktur oder Trichterstruktur aufweist.

8.  Verfahren zur Herstellung einer Polymermembran nach einem der Ansprüche 1 bis 7, umfassend die Schritte:

    Bereitstellen einer hydrophoben bzw. oleophoben Ausgangspolymermembran; und
    Aufrauen mindestens einer Hauptoberfläche der Ausgangspolymermembran durch mechanische Behandlung und gegebenenfalls physikalische und/oder chemische Behandlung.

9.  Verfahren zur Herstellung einer Polymermembran nach einem der Ansprüche 1 bis 7, umfassend die Schritte:

    Bereitstellen einer Ausgangspolymermembran;
    Aufrauen mindestens einer Hauptoberfläche der Ausgangspolymermembran durch mechanische Behandlung und gegebenenfalls physikalische und/oder chemische Behandlung; und
    anschließendes hydrophobes bzw. oleophobes Modifizieren der im vorhergehenden Schritt aufgerauten Polymermembran.

10. Verwendung der Polymermembran nach einem der Ansprüche 1 bis 7 in der Sterilfiltration von gasförmigen Fluiden.

11. Verwendung der Polymermembran nach einem der Ansprüche 1 bis 7 als Flüssigkeitssperre in zu belüftenden flüssigkeitshaltigen Systemen.

**Claims**

1.  A hydrophobic or oleophobic microporous polymer membrane whose surface tension at 20 °C is below 72 mN/m or 21 mN/m having a structurally induced drip-off effect, wherein at least one main surface of the polymer membrane is roughened, has a surface roughness at a height of 1 $\mu$m to 5 $\mu$m with lateral distances of 1 to 5 $\mu$m and has a contact angle with respect to water of at least 125°,
    wherein the roughness of the at least one roughened main surface of the polymer membrane

    is generated by mechanical posttreatment of a hydrophobic/oleophobic starting polymer membrane, or
    is achieved by mechanical treatment in the manufacturing process for the starting polymer membrane and the membrane is subsequently hydrophobically/oleophobically modified.

2.  The polymer membrane as claimed in claim 1, wherein the polymer membrane has a pore size of from 0.1 $\mu$m to 20 $\mu$m.

3.  The polymer membrane as claimed in claim 1 or 2, wherein both main surfaces of the polymer membrane are roughened and have the same surface roughness.

4.  The polymer membrane as claimed in claim 1 or 2, wherein both main surfaces of the polymer membrane are roughened and have a differing surface roughness.

5.  The polymer membrane as claimed in any of claims 1 to 4, wherein the polymer membrane is radiation-resistant up to 50 kGy.

6.  The polymer membrane as claimed in any of claims 1 to 5, wherein the polymer membrane has a symmetric or asymmetric sponge structure.

7.  The polymer membrane as claimed in any of claims 1 to 6, wherein the polymer membrane has an hourglass structure or funnel structure.

8. A method for producing a polymer membrane as claimed in any of claims 1 to 7, comprising the steps:

     providing a hydrophobic or oleophobic starting polymer membrane; and
     roughening at least one main surface of the starting polymer membrane by mechanical treatment and optionally physical and/or chemical treatment.

9. A method for producing a polymer membrane as claimed in any of claims 1 to 7, comprising the steps:

     providing a starting polymer membrane;
     roughening at least one main surface of the starting polymer membrane by mechanical treatment and optionally physical and/or chemical treatment; and
     subsequently hydrophobically or oleophobically modifying the polymer membrane roughened in the preceding step.

10. The use of the polymer membrane as claimed in any of claims 1 to 7 in the sterile filtration of gaseous fluids.

11. The use of the polymer membrane as claimed in any of claims 1 to 7 as a liquid barrier in liquid-containing systems to be vented.

**Revendications**

1. Membrane polymère microporeuse hydrophobe ou oléophobe dont la tension de surface à 20 °C est inférieure à 72 mN/m ou inférieure à 21 mN/m, et ayant un effet déperlant structurellement induit, au moins une surface principale de la membrane polymère étant rendue rugueuse, présentant une rugosité de surface de l'ordre de 1 $\mu$m à 5 $\mu$m, et présentant un angle de contact avec l'eau d'au moins 125°, membrane dans laquelle la rugosité de ladite au moins une surface principale rugueuse de la membrane polymère

     est obtenue par traitement mécanique ultérieur d'une membrane polymère de départ hydrophobe/oléophobe ou est obtenue par traitement mécanique pendant le procédé de fabrication de la membrane polymère de départ modifiée ensuite de manière à la rendre hydrophobe/oléophobe.

2. Membrane polymère selon la revendication 1 ayant une dimension de pore de 0,1 $\mu$m à 20 $\mu$m.

3. Membrane polymère selon la revendication 1 ou 2 dont les deux surfaces principales sont rendues rugueuses et présentent la même rugosité de surface.

4. Membrane polymère selon la revendication 1 ou 2 dont les deux surfaces principales sont rendues rugueuses et présentent une rugosité de surface différente.

5. Membrane polymère selon la revendication 1 à 4 résistante aux rayonnements jusqu'à 50 kGy.

6. Membrane polymère selon l'une des revendications 1 à 5 présentant une structure spongieuse symétrique ou asymétrique.

7. Membrane polymère selon l'une des revendications 1 à 6 présentant une structure en sablier ou en entonnoir.

8. Procédé pour la fabrication d'une membrane polymère selon l'une des revendications 1 à 7, comportant les étapes :

     mise à disposition d'une membrane polymère de départ hydrophobe ou oléophobe ; et
     obtention de la rugosité d'au moins une surface principale de la membrane polymère de départ, par traitement mécanique et éventuellement traitement physique et/ou chimique.

9. Procédé pour la fabrication d'une membrane polymère selon l'une des revendications 1 à 7, comportant les étapes :

     mise à disposition d'une membrane polymère de départ ;

obtention de la rugosité d'au moins une surface principale de la membrane polymère de départ, par traitement mécanique et éventuellement traitement physique et/ou chimique ; et

modification subséquente de la membrane rendue rugueuse à l'étape précédenten, de manière à la rendre hydrophobe ou oléophobe.

10. Utilisation de la membrane polymère selon l'une des revendications 1 à 7 pour la filtration en conditions stériles de fluides gazeux.

11. Utilisation de la membrane polymère selon l'une des revendications 1 à 7 comme couche imperméable aux liquides dans des systèmes aérés contenant des liquides.

Figur 1

Figur 2.1

Figur 2.2

Figur 2.3

Figur 2.4

Figur 2.5

Figur 2.6

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5217802 A
- US 5286382 A
- WO 2009065092 A1
- US 6579342 B2
- EP 2011629 A1
- DE 102010044648344

**In der Beschreibung aufgeführte Nicht-Patentliteratur**

- **E. DRIOLI.** Membrane Science and Technology Series. *Membrane Contactors: Fundamentals, Applications and Potentialities,* 2005, vol. 11
- **D.K. OWENS.** *J. Appl. Polym. Sci.,* 1969, vol. 13, 1741-1747
- **A.W. ADAMSON.** Physical Chemistry of Surfaces. Wiley, 1997
- **G. KÖRÖSI.** *J. Chem. Eng. Data,* 1981, vol. 26, 323-333